Europäisches Patentamt

European Patent Office

Office européen des brevets

(11) Veröffentlichungsnummer: **0 255 661**
**A1**

(12) **EUROPÄISCHE PATENTANMELDUNG**

(21) Anmeldenummer: 87110635.7

(22) Anmeldetag: 22.07.87

(51) Int. Cl.4: **A61C 1/08**

(30) Priorität: 04.08.86 DE 3626384

(43) Veröffentlichungstag der Anmeldung:
10.02.88 Patentblatt 88/06

(84) Benannte Vertragsstaaten:
AT CH DE FR IT LI

(71) Anmelder: **Siemens Aktiengesellschaft Berlin und München**
**Wittelsbacherplatz 2**
**D-8000 München 2(DE)**

(72) Erfinder: **Bierbaum, Thomas, Dipl.-Ing.**
**Kriemhildenstrasse 15a**
**D-6143 Lorsch(DE)**

(54) Zahnärztliches Handstück mit integriertem Lichtleiter.

(57) Die Erfindung bezieht sich auf ein zahnärztliches Handstück mit einem Kopfgehäuse (1) zur Aufnahme eines Werkzeuges (2) und einem im wesentlichen senkrecht zur Symmetrieachse (5) des Kopfgehäuses (1) verlaufenden Halsteil (3), in dem ein Lichtleiter (6, 9) angeordnet ist, dessen Ende (6a, 9a) benachbart dem dem Werkzeug zugewandten Ende des Kopfgehäuses (1) am Halsteil (3) austritt und dort so endet, daß die Lichtstrahlen im wesentlichen auf die Spitze (S) des Werkzeuges (2) geworfen werden. Um u.a. eine optimale Anpassung des Lichtleiterendes an die Handstückkontur zu erzielen, bildet erfindungsgemäß die Stirnfläche (7, 10) des Lichtleiterendes (6a, 9a) die optische Grenzfläche zwischen einfallenden und gebrochenen Lichtstrahlen. Die Stirnfläche, die gleichsam einen Teil der Mantelfläche (8) des Halsteils (3) bildet, ist außerdem in bezug auf eine durch die Längsachse (4) des Handstückes und die Werkzeugspitze (S) definierte Bezugsebene so geneigt, daß die austretenden Lichtstrahlen zu dieser Ebene hin abgelenkt werden.

FIG 1

EP 0 255 661 A1

## Zahnärztliches Handstück mit integriertem Lichtleiter

Die Erfindung bezieht sich auf ein zahnärztliches Handstück mit einem Kopfgehäuse zur Aufnahme eines Werkzeuges und einem mit seiner Symmetrieachse etwa senkrecht zur Symmetrieachse des Kopfgehäuses verlaufenden Halsteil, in dem wenigstens ein Lichtleiter angeordnet ist, dessen Ende benachbart dem dem Werkzeug zugewandten Ende des Kopfgehäuses am Halsteil austritt und dort so endet, daß die Lichtstrahlen im wesentlichen auf die Spitze des Werkzeuges geworfen werden.

Bei einem bekannten solchen Handstück (US-A-33 97 457) ist der als Faserbündel ausgebildete Lichtleiter außen am Halsteil befestigt. Der Lichtleiter ist entsprechend der Kontur von Halsteil und Kopfgehäuse verlegt, wobei die Stirnfläche (Lichtaustrittsfläche) senkrecht zu den Faserachsen der einzelnen, den Lichtleiter bildenden Lichtleitfasern geschliffen ist und in einer Ebene liegt.

Wegen des nicht integrierten, sondern außen am Halsteil verlegten Lichtleiters bildet eine solche Anordnung unerwünschte vorstehende Kanten und Schmutzecken. Um diese wenistens teilweise zu eliminieren, wäre ein Angleich an die Außenkontur von Kopfgehäuse und Halsteil notwendig, d.h. der Lichtleiter müßte mit geeigneten Füllmaterialien versehen am Handstück befestigt und so der Kontur des Handstückes angepaßt werden.

Bei einem anderen bekannten Handstück (US-A-43 41 518) ist der Lichtleiter innerhalb des Handstückes geführt und endet in einem aus dem Halsteil vorstehenden, schräg zur Werkzeugspitze ausgerichteten Rohrstutzen. Es werden Ausführungen sowohl mit einem als auch mit zwei Lichtleiterenden gezeigt. Obgleich bei den bekannten Ausführungsformen die Lichtleiterenden in einem Rohrstutzen gefaßt sind, so bildet eine solche Anordnung trotzdem Schmutzkanten, die sehr schlecht, meist nur durch Einsatz zusätzlicher Hilfsmittel, wie Bürsten od.dgl., sauber zu halten sind. Ein weiterer Nachteil ist darin zu sehen, daß durch die gegenüber dem Halsteil vorstehenden Lichtleiterenden die Sicht des Zahnarztes zum Arbeitsfeld beeinträchtigt wird.

Letzteres trifft auch für ein weiteres bekanntes Handstück (US-A-45 19 780) mit innen geführtem Lichtleiter und zwei Lichtaustrittsstellen zu, bei dem die Lichtleiterenden in einem gegenüber dem Halsteil vorstehenden Ansatzteil gefaßt sind. Auch hier liegen die beiden Stirnflächen (Lichtaustrittsflächen) der Lichtleiterenden in einer Ebene und senkrecht zur Faserachse der Lichtleitfasern. Eine solche Anordnung bedingt wiederum relativ weit aus dem Halsteil vorstehende Lichtleiterenden, die, selbst wenn sie, wie im Ausführungsbeispiel gezeigt, in einem Ansatzteil gefaßt sind, und dieses an das Halsteil angeformt ist, also Bestandteil des Halsteils ist, auch aus den oben erwähnten hygienischen Gründen störend sind.

Der im Anspruch 1 angegebenen Erfindung liegt die Aufgabe zugrunde, ein zahnärztliches Handstück der eingangs genannten Art zu - schaffen, dem die vorgenannten Nachteile nicht anhaften, bei welchem also insbesondere eine bessere Angleichung des Lichtleiteraustritts an die vorgegebene Handstückkontur und damit eine leichtere und gründlichere Reinigung des Handstückes in diesem Bereich gegeben ist sowie bessere Sichtverhältnisse zum Arbeitsfeld bei Benutzung des Handstückes erzielbar sind.

Die Stirnfläche des Lichtleiterendes kann gemäß einer vorteilhaften Ausgestaltung der Erfindung durch einen entsprechenden Anschliff eine konvexe Krümmung erhal-ten, wodurch nicht nur eine Anpassung an die meist im Querschnitt kreisförmige Kontur des Halsteils erreicht wird, sondern auch eine Erhöhung der Beleuchtungsstärke und ein gleichmäßigeres Ausleuchten des Arbeitsfeldes erzielt wird.

Alternativ zu der konvexen Krümmung kann das Lichtleiterende vorteilhafterweise auch plan geschliffen sein. Infolge der relativ zur Bezugsebene geneigten Lichtaustrittsfläche läßt sich damit, wie bei der gekrümmten Austrittsfläche, eine Ablenkung der Lichtstrahlen zur Werkzeugspitze hin erzielen. Wenn mehrere Lichtleiteraustrittsstellen vorhanden sind, liegen die Stirnflächen dieser Lichtleiterenden vorteilhafterweise in zwei sich - schneidenden Ebenen, wobei die Schnittlinie dann in der Bezugsebene liegt. Durch solche Anschliffe läßt sich eine gewisse Fokussierung und damit eine Erhöhung der Beleuchtungsstärke und ein gleichmäßigeres Ausleuchten des Arbeitsfeldes erzielen.

Mehrere Ausführungsbeispiele der Erfindung werden nachfolgend anhand der Zeichnung näher erläutert.
Es zeigen:

Figur 1 einen Teil eines zahnärztlichen Handstückes teilweise geschnitten,

Figuren 2 bis 4 verschiedene Ausführungsformen, betreffend die Gestaltung des bzw. der Lichtleiterenden, wobei die Figuren jeweils einen Querschnitt entlang der Linie A-A in Figur 1 zeigen.

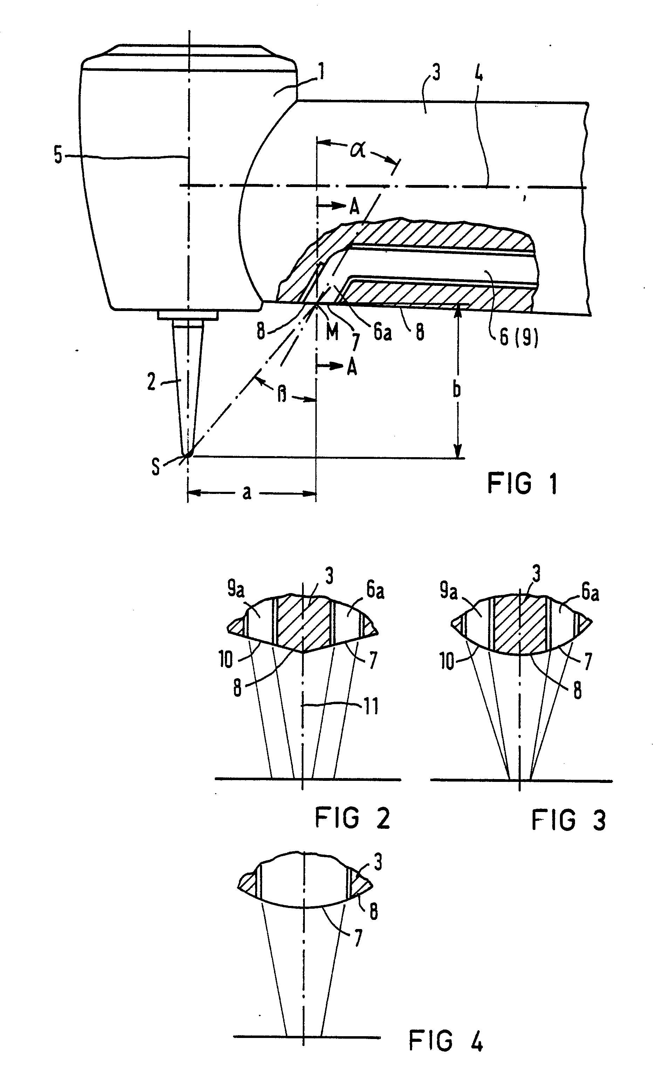

Die Figur 1 zeigt in einer Seitenansicht und teilweise im Schnitt einen Teil eines zahnärztlichen Handstückes mit einem Kopfgehäuse 1, an dem in bekannter Weise ein Werkzeug 2 (Bohrer, Fräser od.dgl.) drehbar gelagert ist. An das Kopfgehäuse 1 schließt sich in bekannter Weise ein Halsteil 3 an, dessen Längsachse 4 etwa senkrecht zur Symmetrieachse 5 des Kopfgehäuses 1 verläuft. Im Halsteil 3 ist ein aus einem Faserbündel gebildeter Lichtleiter 6 angeordnet, dessen Ende 6a, bezogen auf einen Referenzpunkt M, in einem Abstand a, b von der Werkzeugspitze S aus dem Halsteil 3 ausmündet.

Der Lichtaustritt erfolgt an der mit 7 bezeichneten Stirnfläche des Lichtleiterendes 6a; diese bildet die optische Grenzfläche zwischen den einfallenden Lichtstrahlen (Einfallswinkel $\alpha$) und den gebrochenen Lichtstrahlen (Brechungswinkel $\beta$). Gleichsam bildet diese Fläche einen Teil der Mantelfläche 8 des Halsteils 3 in diesem Bereich. Das Lichtleiterende 6a ist mit einem dem Einfallswinkel $\alpha$ entsprechenden Winkel im Halsteil eingebaut, der sich nach Festlegung der an sich frei wählbaren Abstände a und b unter Zugrundelegung des Brechungsgesetzes sinus $\beta$ = n • sinus $\alpha$ festlegen läßt, wobei n der Brechungsindex ist.

Die Stirnfläche 7 ist weiterhin, wie aus den Ausführungsbeispielen nach den Figuren 2 bis 4 ersichtlich, in bezug auf eine durch die Längsachse 4 und die Spitze S des Werkzeuges 2 bestimmte Ebene 11 (Längssymmetrieebene) derart geneigt, daß die austretenden Lichtstrahlen zu dieser Ebene hin gebrochen, d.h. abgelenkt werden.

Eine über die Lichtaustrittsfläche gesehen gleichbleibende Ablenkung wird erzielt, wenn, wie in Figur 2 dargestellt, die Stirnfläche 7 plangeschliffen ist, die Stirnfläche also eben ist. Eine unterschiedliche Ablenkung und damit eine zusätzliche Bündelung der Lichtstrahlen wird erzielt, wenn die Stirnfläche, wie in den Ausführungsbeispielen nach den Figuren 3 und 4 dargestellt, einen konvexen Anschliff und dadurch eine entsprechende Linsenwirkung aufweist. Infolge der Bündelung des Lichts wird so auch eine Erhöhung der Beleuchtungsstärke und ein gleichmäßigeres Ausleuchten des Arbeitsfeldes erreicht.

Wie die Figuren 2 und 3 zeigen, können alternativ zu einem einzigen Lichtleiteraustrittsende auch zwei Lichtleiterenden 6a, 9a vorgesehen sein. Deren Stirnflächen 7, 10 liegen vorteilhafterweise, wie bereits erwähnt, in zwei sich schneidenden Ebenen, wobei deren Schnittlinie in der mit 11 bezeichneten Ebene liegt, durch die auch das Werkzeug 2 verläuft.

Ähnlich wie in Figur 4 für nur einen Lichtleiter dargestellt, können entsprechend Figur 3 bei zwei Lichtleiterenden deren Stirnflächen 7, 10 eine konvexe Wölbung aufweisen, die dann bündig mit einer entsprechend konvexen Wölbung des Halsteils 3 verläuft. Letztere Lösung ist besonders vorteilhaft, da das Halsteil 3 in der Regel einen kreisförmigen Querschnitt aufweist; durch entsprechende Formgebung des Halsquerschnittes kann eine optimale Anpassung an das Lichtleiterende erreicht werden.

## Ansprüche

1. Zahnärztliches Handstück mit einem Kopfgehäuse (1) zur Aufnahme eines Werkzeuges (2) und einem im wesentlichen senkrecht zur Symmetrieachse (5) des Kopfgehäuses (1) verlaufenden Halsteil (3), in dem wenigstens ein Lichleiter (6, 9) angeordnet ist, dessen Ende (6a, 9a) benachbart dem dem Werkzeug zugewandten Ende des Kopfgehäuses (1) am Halsteil (3) austritt und dort so endet, daß die Lichtstrahlen im wesentlichen auf die Spitze (S) des Werkzeuges (2) geworfen werden, **dadurch gekennzeichnet,** daß die Stirnfläche (7, 10) des Lichtleiterendes (6a, 9a) die optische Grenzfläche zwischen einfallenden und gebrochenen Lichtstrahlen bildet und diese Fläche einen Teil der Mantelfläche (8) des Halsteils (3) bildet und relativ zu einer durch die Längsachse (4) des Handstückes und die Werkzeugspitze (S) bestimmten Bezugsebene (11) so geneigt ist, daß die austretenden Lichtstrahlen zu dieser Ebene (11) hin abgelenkt werden.

2. Zahnärztliches Handstück nach Anspruch 1, **dadurch gekennzeichnet,** daß die Stirnfläche (7, 10) konvex gewölbt ist (Fig. 3, 4).

3. Zahnärztliches Handstück nach Anspruch 1, **dadurch gekennzeichnet,** daß die Stirnfläche (7, 10) des Lichtleiterendes (6a, 9a) eben und in einem spitzen Winkel zur Bezugsebene (11) verläuft.

4. Zahnärztliches Handstück nach einem der Ansprüche 1, bis 3, **dadurch gekennzeichnet,** daß am Halsteil (3) mehrere, vorzugsweise zwei, Lichtleiterenden (6a, 9a) austreten.

5. Zahnärztliches Handstück nach Anspruch 4, **dadurch gekennzeichnet,** daß die Stirnflächen (7, 10) von zwei Lichtleiterenden (6a, 9a) in zueinander geneigten, sich schneidenden Ebenen angeordnet sind, deren Schnittlinie in der Bezugsebene liegt (Fig. 2).

6. Zahnärztliches Handstück nach Anspruch 2, **dadurch gekennzeichnet,** daß die Stirnflächen (7, 10) der Lichtleiterenden (6a, 9a) bündig mit einer konvex gewölbten Oberfläche (8) des Halsteils (3) verlaufen (Fig. 3, 4).

FIG 1

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | GB-A-2 118 839 (KALTENBACH & VOIGT GmbH) <br> * Figuren 2,3; Seite 2, Zeilen 43-93 * & US-A-4 519 780 | 1,3,4 | A 61 C 1/08 |
| | --- | | |
| A | US-A-3 959 883 (WALLS et al.) <br> * Figur 18; Spalte 11, Zeilen 52-68 * | 2 | |
| | --- | | |
| A | FR-A-2 525 462 (KALTENBACH & VOIGT GmbH) | | |
| | --- | | |
| A | EP-A-0 138 119 (SIEMENS AG) | | |
| | --- | | |
| A | DE-A-3 132 995 (SIEMENS AG) | | RECHERCHIERTE SACHGEBIETE (Int. Cl.4) |
| | ----- | | A 61 C |

Der vorliegende Recherchenbericht wurde für alle Patentansprüche erstellt.

| Recherchenort | Abschlußdatum der Recherche | Prüfer |
|---|---|---|
| DEN HAAG | 22-10-1987 | DEUTSCH J.P.M. |